# EUROPÄISCHE PATENTSCHRIFT

(11) **EP 2 815 865 B1**
(45) Veröffentlichungstag und Bekanntmachung des Hinweises auf die Patenterteilung: **02.03.2016**
(21) Anmeldenummer: 14164440.1
(22) Anmeldetag: 11.04.2014
(51) Int. Cl.: B29C 45/14, B29C 45/00, B29C 33/48, B29C 45/16

(54) **Verfahren zur Herstellung eines Kunststoff-Bauteilverbundes**
Method for producing a plastic composite component
Procédé de fabrication d'un composant composite en matière plastique

(30) Priorität: 18.06.2013 DE 102013010238
(43) Veröffentlichungstag der Anmeldung: 24.12.2014
(73) Patentinhaber: Volkswagen Aktiengesellschaft, 38440 Wolfsburg (DE)
(72) Erfinder: Gneiting, Olga, 38524 Sassenburg (DE)

(56) Entgegenhaltungen:
- EP-A1- 1 310 343
- EP-A1- 1 445 087
- EP-A1- 1 857 251
- WO-A1-2006/016296
- DE-A1- 19 546 685
- DE-A1-102005 012 624
- DE-B3-102011 107 608

## Beschreibung

Die Erfindung betrifft ein Verfahren zur Herstellung eines Bauteilverbundes, der aus einem Träger, etwa einer Blende, und einem Lichtleiter aufgebaut ist, nach dem Oberbegriff des Patentanspruches 1, und einen solchen Bauteilverbund nach dem Anspruch 5.

Bei der Ausstattung eines Fahrzeuginnenraums kann, zum Beispiel zur Bildung eines markanten, individualisierenden Linienverlaufes in einem Innenverkleidungsteil, mit Hilfe eines Lichtleiters eine entsprechende Hinterleuchtung des Innenverkleidungsteils bereitgestellt werden. Dabei kann das Innenverkleidungsteil als ein lichtundurchlässiger Träger oder eine Blende ausgeführt sein, an der der Lichtleiter angebracht ist, der entsprechende Konturverläufe des Innenverkleidungsteiles hervorhebt. Der Lichtleiter kann in gängiger Weise über entsprechende Befestigungselemente am Träger montiert sein, was montagetechnisch aufwändig sowie bauteil- und bauraumintensiv ist.

Aus der EP 1 445 087 A1 ist ein gattungsgemäßes Verfahren zur Herstellung einer aus einer Frontblende und einer darin verschieblichen Bedientaste bestehenden Teileeinheit mittels Spritzgießen bekannt. Beim Spritzgießen wird zunächst die Frontblende mit einer ersten Werkstoffkomponente gespritzt. Nach dem Aushärten der ersten Werkstoffkomponente wird die Bedientaste mit einer zweiten Werkzeugkomponente durch Spritzgießen hergestellt. Die beiden Werkstoffkomponenten gehen keine Verbindung miteinander ein. Zudem weist die erste Werkstoffkomponente eine Schwindung auf, die geringer als die Schwindung der zweiten Werkstoffkomponente ist, so dass die Bedientaste toleranzarm in der Frontblende aufgenommen ist, ohne dass bei einer Betätigung eine Klemmung auftritt.

Die WO 2006/016296 A1 beschreibt einen Lichtleiter und einen Träger, die durch Spritzgießen so hergestellt sind, dass aufgrund unterschiedlicher Materialschwindung ein Spalt zwischen den beiden Bauteilen entsteht. Der Lichtleiter besteht aus einem transparenten Material und erstreckt sich von einer Lichtquelle zu einem Lichtspot. Zur Befestigung des Lichtleiters sind Befestigungselemente vorgesehen.

Die DE 10 2005 012 624 A1 beschreibt ein Verfahren zur Herstellung eines Kunststoffbauteils mit einer ersten und einer zweiten Komponente, wobei die zweite Komponente beweglich in der ersten Komponente aufgenommen ist. Die beiden Kunststoffmaterialien, die beim Spritzgießverfahren verwendet werden, werden so gewählt, dass das zweite Kunststoffmaterial eine niedrigere Schmelztemperatur und eine höhere Schwindung als das erste Kunstoffmaterial hat, so dass ein Spalt zwischen den beiden Komponenten entsteht.

Aus der DE 195 46 685 A1 ein Verfahren zur Herstellung eines Kunststoffspritzgussteils bekannt, bei dem sich die beiden verwendeten Kunststoffmaterialien nicht miteinander verbinden. Zur Bereitstellung eines teillackierten Stoßfängers wird das so hergestellte Spritzgussteil anschließend lackiert und das lösbare Kunststoffteil entfernt, so dass der Stoßfänger im Bereich des lösbaren Kunststoffteils unlackiert ist.

Die EP 1 857 251 A1 beschreibt ein Verfahren zur Herstellung eines Bauteilverbunds, bei dem beim Spritzen des zweiten Teils aufgrund einer höheren Spritztemperatur das Material des ersten Teils aufgeschmolzen wird, um eine feste Verbindung der beiden Teile miteinander zu gewährleisten.

Die EP 1 310 343 A1 zeigt ein Verfahren zur Herstellung eines Bauteilverbundes, bei dem zwei Kunststoffmaterialien verwendet werden, die ein unterschiedliches Schrumpfungsverhalten aufweisen.

Aus der DE 10 2011 107 608 B3 ist ein Spritzverfahren bekannt, bei dem eine erste, äußere Kunststoffkomponente gespritzt wird und anschließend eine zweite Kunststoffkomponente unter Druck gegen eine elastisch verformbare Wandung des ersten Teils gespritzt wird. Nach dem Abkühlen und einer daraus resultierenden Schrumpfung des zweiten Teils federt die Wandung zurück, weshalb eine Klappenvorrichtung mit einer guten Dichtwirkung erzeugt werden kann.

Aus der DE 10 2005 036 533 A1 ist ein Verfahren zur Herstellung eines Bauteilverbunds bekannt, der aus einem Träger, etwa einer Blende oder einem Fahrzeug-Innenverkleidungsteil, und einem Lichtleiter aufgebaut ist. Bei dem Verfahren wird in einem ersten Verfahrensschritt eine Träger-Kunststoffkomponente in eine, die Negativform des Bauteilverbundes nachbildende Hauptkammer eingespritzt. Die Einspritzung erfolgt unter Freilassung einer, die Negativform des Lichtleiters nachbildenden Teilkammer. In einem zweiten Verfahrensschritt wird anschließend bei freigegebener Freikammer die Lichtleiter-Kunststoffkomponente in die Teilkammer eingespritzt.

Der obige Spritzgießvorgang ist ein bauteil- und bauraumsparendes sowie montagetechnisch günstiges Mehrkomponenten-Spritzgießverfahren, bei dem die Materialpaarung zwischen dem Träger und dem Lichtleiter so ausgelegt ist, dass eine stoffschlüssige Bauteilverbindung ermöglicht ist. Zur Bildung dieser Stoffschlussverbindung wird beim Anspritzen der Lichtleiter-Komponente die Träger-Komponente an der die Kontaktfläche nochmals aufgeweicht. Dadurch kommt es an der Kontaktfläche zu Stoffübergängen, die eine unlösbare Bauteilverbindung gewährleisten.

Insbesondere bei linienförmig langgestreckten Lichtleitern mit entsprechend langen Lichtwegen zwischen einer Lichteinkoppelstelle, an der die Lichtquelle angeordnet ist, und der Lichtaustrittsstelle, ergibt sich die folgende Problematik: So wird an der Kontaktfläche der stoffschlüssig aneinander gefügten Kunststoffkomponenten das Licht nicht vollständig reflektiert und im Lichtleiter zur Lichtaustrittsfläche geleitet. Vielmehr wird an der Kontaktfläche zwischen dem Lichtleiter und dem Träger aufgrund des Materialübergangs ein gewisser Lichtanteil absorbiert. Dadurch kann speziell bei langgestreckten Lichtleitern keine gleichmäßige Beleuchtung über die gesamte Längserstreckung des Lichtleiters gewährleistet werden. Vielmehr reduziert sich bei größer werdendem Abstand zur Lichteinkoppelstelle der aus dem Lichtleiter austretende Lichtanteil merklich.

Die Aufgabe der Erfindung besteht darin, ein Verfahren sowie einen Bauteilverbund, bestehend aus einem Träger und einem Lichtleiter, bereitzustellen, bei dem eine gleichmäßige Beleuchtung des Lichtleiters entlang seiner Längserstreckungsrichtung gewährleistet ist.

Die Aufgabe ist durch die Merkmale des Patentanspruches 1 und des Patentanspruches 5 gelöst. Bevorzugte Weiterbildungen der Erfindung sind in den Unteransprüchen offenbart.

Die Erfindung beruht auf dem Sachverhalt, dass bei einer Stoffschlussverbindung des Lichtleiters an einem Träger speziell an deren Stoffübergangsfläche ein gewisser Lichtanteil absorbiert wird, der nicht mehr zur Beleuchtung der Träger-Kontur zur Verfügung steht. Vor diesem Hintergrund wird gemäß dem Kennzeichnungsteil des Patentanspruches 1 der Bauteilverbund nicht mehr in einem Mehrkomponenten-Spritzgießverfahren hergestellt, sondern vielmehr in einem Montagespritzgießverfahren. Beim Montagespritzgießen werden separat gespritzte Einzelteile nicht durch eine Stoffschlussverbindung zusammengesetzt, sondern der Träger und der Lichtleiter werden ohne Stoffschlussverbindung formschlüssig und unlösbar miteinander verbunden. An der Grenzfläche zwischen dem Lichtleiter und dem Träger ist somit kein Material- oder Stoffübergang vorhanden. Dadurch ist der am Lichtleiter/Träger-Übergang absorbierte Lichtanteil signifikant reduzierbar, und zwar im Vergleich zu einer Stoffschlußverbindung mit Material-bzw. Stoffübergang an der Grenzfläche, wie es bei einem herkömmlichen Mehrkomponenten-Spritzgießverfahren der Fall ist.

Die Herstellung des Bauteilverbundes erfolgt damit in einem einzigen Spritzgießwerkzeug sowie in einem Prozessschritt. Für die Befestigung des Lichtleiters werden daher keine separaten Montageschritte oder Fügeelemente benötigt.

Analog zum Mehrkomponenten-Spritzgießverfahren wird in einem ersten Verfahrensschritt eine Träger-Kunststoffkomponente in eine die Negativform des Trägers nachbildende Hauptkammer eingespritzt, und zwar unter Freilassung einer die Negativform des Lichtleiters nachbildenden Teilkammer. Anschließend wird die Träger-Kunststoffkomponente ausgehärtet. In einem folgenden zweiten Verfahrensschritt wird eine Lichtleiter-Kunststoffkomponente in die Teilkammer eingespritzt wird.

Zur Vermeidung einer Haftverbindung bzw. Stoffschlussverbindung können der Träger und der Lichtleiter aus nicht aneinander haftenden Kunststoffkomponenten hergestellt sein, insbesondere einer polaren Kunststoffkomponente und einer unpolaren Kunststoffkomponente. Beispielhaft kann das Material der Träger-Kunststoffkomponente ein PC oder ein ABS sein, während das Material der Lichtleiter-Kunststoffkomponente ein COP sein kann.

Alternativ oder zusätzlich zur obigen Materialpaarung kann die Lichtleiter-Kunststoffkomponente durch eine spezielle Temperaturführung an die Träger-Kunststoffkomponente angespritzt werden. Bevorzugt kann die Träger-Kunststoffkomponente eine höhere Schmelztemperatur aufweisen als die Lichtleiter-Kunststoffkomponente. Auf diese Weise ist gewährleistet, dass es beim Anspritzen der Lichtleiter-Kunststoffkomponente an die bereits ausgehärtete Träger-Kunststoffkomponente zu keinem Anhaften kommt, das heißt eine Stoffschlussverbindung vermieden ist.

Das beim Verfahren eingesetzte Spritzgießwerkzeug weist erfindungsgemäß Werkzeughälften auf, die die Hauptkammer und die Teilkammer begrenzen. Zudem ist erfindungsgemäß ein Sperrschieber vorgesehen, der im ersten Verfahrensschritt die Teilkammer schließt und erst im zweiten Verfahrensschritt die Teilkammer freigibt, um die Lichtleiter-Kunststoffkomponente einzuspritzen.

Bevorzugt kann vor der Durchführung des ersten Verfahrensschrittes (das heißt dem Einspritzen der Träger-Kunststoffkomponente) ein Dekorelement in die Formkammer des Spritzgießwerkzeuges eingebracht werden. Das Dekorelement, das heißt insbesondere eine Dekor-Lackschicht, kann aus Designgründen an der Sichtseite des Bauteilverbundes vorgesehen sein. Hierbei bietet sich das sogenannte Insert-Molding an, bei dem ein Vorformling mit Stanzung im Lichtleiterbereich eingelegt wird. Alternativ kann ein IMD-Verfahren (In-Mold-Decoration) erfolgen, bei dem eine endlos lackierte Dekorfolie durch das Spritzgießwerkzeug geführt und hinterspritzt wird. Die von der Dekorfolie getragene Lackschicht geht von der Dekorfolie auf die Träger-Kunststoffkomponente über. Es kommt aber nicht zu einer stoffschlüssigen Haftverbindung zwischen dem Lichtleiter und der Dekorfolie, so dass in einem Verfahrensschritt sowohl die Folie aufgebracht werden kann, als auch der Lichtleiter eingespritzt werden kann, ohne dass die Folie am Lichtleiter haftet.

Zur Gewährleistung einer Lackschicht-Haftung am Träger kann eine Haftvermittler-Schicht vorgesehen sein. Im Hinblick auf die oben erwähnte Licht-Absorption speziell an stoffschlüssigen Materialübergängen ist es jedoch nachteilig, wenn zwischen dem Dekorelement und dem Lichtleiter eine Haftverbindung (das heißt Stoffschlussverbindung) vorhanden ist. Vor diesem Hintergrund kann die Haftvermittler-Schicht derart ausgelegt sein, dass es zwischen dem Dekorelement und dem Lichtleiter zu keiner Haftverbindung kommt.

Wie oben erwähnt, sind im erfindungsgemäßen Bauteilverbund der Träger und der Lichtleiter zwar formschlüssig und unlösbar miteinander verbunden, jedoch ohne Stoffschlussverbindung. Zur Steigerung der Reflektionsfähigkeit an der Grenzfläche kann zusätzlich zwischen dem Lichtleiter und dem Träger ein geringfügiger Montagespalt gebildet sein, der insbesondere durch Materialschwindung beim Herstellungsprozess entstehen kann.

Der Träger des Bauteilverbunds kann einen Montagekanal aufweisen, in dem der Lichtleiter formschlüssig und unlösbar eingesetzt ist. Speziell zur Bereitstellung dieser Formschlussverbindung ist erfindungsgemäß in der Kanalwand des Montagekanals eine Formschlusskontur, insbesondere Wandrücksprünge, ausgebildet. Die wandseitige Formschlusskontur ist mit einer entsprechenden Gegenkontur, insbesondere Rastnasen, des Lichtleiters in unlösbarem Rasteingriff.

Wie bereits oben erwähnt, kann der Bauteilverbund an seiner Sichtseite ein Dekorelement, das heißt eine Dekor-Lackschicht oder dergleichen aufweisen. Das Dekorelement kann eine sichtseitige Kanalöffnung des im Träger ausgebildeten Montagekanals überdecken. Zudem kann das Dekorelement unter Zwischenlage einer Haftvermittler-Schicht stoffschlüssig mit dem Träger verbunden sein, jedoch ohne eine solche Stoffschlussverbindung mit dem Lichtleiter sein.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert.

Es zeigen:
- Fig. 1: in einer teilweisen Schnittdarstellung ein im Fahrzeuginnenraum eines Fahrzeuges verbautes Innenverkleidungsteil; sowie
- Fig. 2 bis 5: unterschiedliche schematische Schnittansichten eines Spritzgießwerkzeugs, die die Verfahrensschritte zur Herstellung des Innenverkleidungsteiles veranschaulichen.

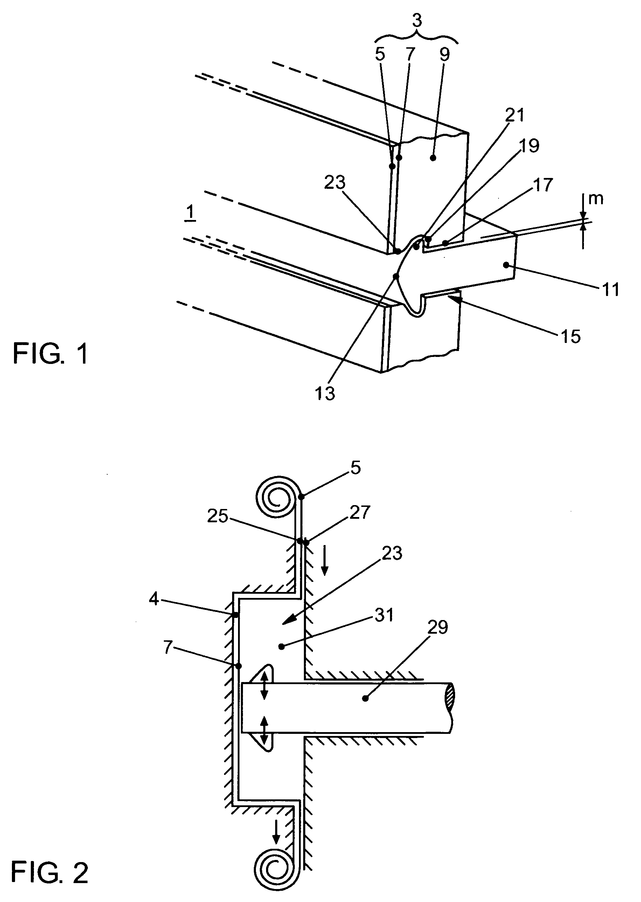

In der Fig. 1 ist in einer grob schematischen Perspektivansicht ein, den Fahrzeuginnenraum 1 begrenzendes Innenverkleidungsteil 3 gezeigt. Das Innenverkleidungsteil 3 ist ein Bauteilverbund, bestehend aus einer dem Fahrzeuginnenraum 1 zugewandten Dekor-Lackschicht 5, einem Haftvermittler 7 sowie einem Träger 9. Gemäß der Fig. 1 ist in dem Träger 9 ein Lichtleiter 11 integriert. Der Lichtleiter 11 weist eine nicht gezeigte Lichteinkoppelstelle auf, an der Licht von einer Lichtquelle in den Lichtleiter 11 eingekoppelt wird. Zudem weist der Lichtleiter 11 an seiner, dem Fahrzeuginnenraum 1 zugewandte Seite eine Lichtaustrittsstelle 13 auf, von der das Licht in den Fahrzeuginnenraum 1 austritt. In der Fig. 1 ist der Lichtleiter 11 mit seiner Lichtaustrittsstelle 13 in einer Längserstreckungsrichtung x linienförmig langgestreckt ausgelegt. Das Innenverkleidungsteil kann beispielsweise eine Blende in der Türinnenverkleidung sein, andere Anwendungen im Fahrzeuginnenraum sind ebenfalls denkbar.

In der Fig. 1 ist der Lichtleiter 11 in einem später beschriebenen Montagespritzgießverfahren formschlüssig und unlösbar, jedoch nicht stoffschlüssig, mit dem Träger 9 in Verbindung. Hierzu weist der Träger 9 einen quer zur Längserstreckungsrichtung x durch den Träger 9 geführten Montagekanal 15 auf, in dem der Lichtleiter 11 eingesetzt ist. An den Kanalwänden 17 sind Wandrücksprünge 19 vorgesehen, in die jeweils dazu korrespondierende Rastnasen 21 des Lichtleiters 11 einragen. Zwischen den Kanalwänden 17 und dem Lichtleiter 11 ist ein geringfügiger Montagespalt m vorhanden. Zudem ist die, dem Fahrzeuginnenraum 1 zugewandte Kanalöffnung 23 (Fig. 1) mit der Dekor-Lackschicht 5 überdeckt.

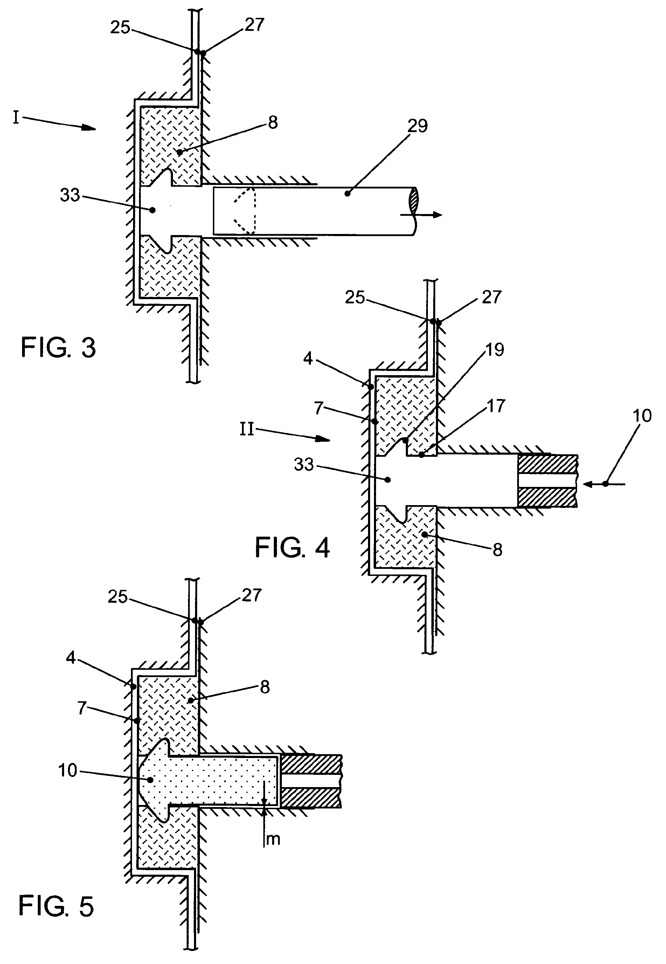

Nachfolgend ist anhand der Fig. 2 bis 5 das Verfahren zur Herstellung des in der Fig. 1 gezeigten Bauteilverbundes beschrieben: So wird gemäß der Fig. 2 zunächst eine Endlos-Dekorfolie 4 (IMD-Folie) mit darauf aufgebrachter Dekor-Lackschicht 5 durch eine Formkammer 23 des Spritzgusswerkzeuges geführt. Die Formkammer 23 ist durch die beiden Werkzeughälften 25, 27 des Spritzgusswerkzeuges begrenzt. Wie aus den Fig. 2 und 3 hervorgeht, ist die Formkammer 23 in eine Hauptkammer 31 (Fig. 2) und in eine Teilkammer 33 (Fig. 3) unterteilbar.

Die Erfindung ist jedoch nicht auf das in den Figuren dargestellte IMD-Verfahren beschränkt. Alternativ zum dargestellten IMD-Verfahren kann das Dekorelement auch als ein Einlegerteil in die Formkammer eingelegt und hinterspritzt werden (Film-Insert-Moulding).

In der Fig. 2 ist die Teilkammer 33 von einem Sperrschieber 29 eingenommen. Bei der Durchführung des ersten Verfahrensschrittes I, das heißt dem Einspritzen einer Träger-Kunststoffkomponente 8, wird daher lediglich die Hauptkammer 31 gefüllt und die Dekorfolie 4 hinterspritzt. Die Lackschicht 5 geht dabei von der Dekorfolie 4 auf die Träger-Kunststoffkomponente 8 über (IMD-Verfahren). Anschließend wird der Sperrschieber 29 in einer Entformungsrichtung aus der Formkammer 23 gezogen, wodurch die zweite Teilkammer 33 (Fig. 3) freigelegt ist. In einem nachfolgenden zweiten Verfahrensschritt II (Fig. 4) wird die Lichtleiter-Kunststoffkomponente 10 in die noch freie Teilkammer 33 eingespritzt. Der zweite Verfahrensschritt II erfolgt erst, nachdem die erste Träger-Kunststoffkomponente 8 in der Formkammer 23 ausgehärtet ist.

Die Träger-Kunststoffkomponente 8 weist im Vergleich zur Lichtleiter-Kunststoffkomponente 10 eine wesentlich höhere Schmelztemperatur auf. Dadurch ist die folgende Prozessführung ermöglicht: Zunächst wird die erste Träger-Kunststoffkomponente 8 eingespritzt und anschließend ausgehärtet. Erst nach dem Aushärten der Träger-Kunststoffkomponente 8 wird dann die Lichtleiter-Kunststoffkomponente 10 in die Teilkammer 33 eingespritzt, und zwar bei einer Schmelztemperatur unterhalb der Schmelztemperatur der Träger-Kunststoffkomponente 8. Auf diese Weise ist eine Haftverbindung (Stoffschlussverbindung) zwischen den beiden Kunststoffkomponenten mit entsprechendem Material -bzw. Stoffübergang an der Träger/Lichtleiter-Grenzfläche vermieden. Zusätzlich kann sich durch den Materialschwund der Lichtleiter-Kunststoffkomponente 10 beim Abkühlvorgang der bereits oben erwähnte Montagespalt m ausbilden. Alternativ und/oder zusätzlich ist die Materialpaarung, bestehend aus der Lichtleiter-Kunststoffkomponente 8 und der Träger-Kunststoffkomponente 10, so gestaltet, dass jeweils ein unpolares und ein polares Kunststoffmaterial im Einsatz ist, das heißt nicht aneinander haftende Kunststoffe verwendet werden.

In der Fig. 5 ist der fertiggestellte Bauteilverbund in dem Spritzgießwerkzeug gezeigt. Die an der der Träger-Kunststoffkomponente 8 angespritzte Lichtleiter-Kunststoffkomponente 10 ist hier unter Materialschwund abgekühlt, so dass der Materialspalt m zwischen dem Lichtleiter 11 und dem Träger 9 entsteht. Träger 8 und Lichtleiter 11 sind somit zwar formschlüssig, jedoch ohne Stoffschlussverbindung miteinander verbunden. Die Reflektionsfähigkeit des Lichtleiters 11 wird somit nicht beeinträchtigt. Das Licht verteilt sich über die gesamte Länge des Lichtleiters 11 ohne Verluste, das Innenverkleidungsbauteil 3 wird gleichmäßig beleuchtet.

## Patentansprüche

1. Verfahren zur Herstellung eines Bauteilverbunds (3), der zumindest aus einem Träger (9), etwa einer Blende, und einem Lichtleiter (11) aufgebaut ist, mit einem ersten Verfahrensschritt (I), bei dem eine Träger-Kunststoffkomponente (8) in eine die Negativform des Trägers (9) nachbildende Hauptkammer (31) eingespritzt wird, und zwar unter Freilassung einer die Negativform des Lichtleiters (11) nachbildenden Teilkammer (33), und mit einem zweiten Verfahrensschritt (II), bei dem eine Lichtleiter-Kunststoffkomponente (10) in die Teilkammer (33) eingespritzt wird, wobei der Bauteilverbund (3) in einem Montagespritzgießverfahren hergestellt wird, bei dem der Träger (9) und der Lichtleiter (11) ohne Stoffschlussverbindung formschlüssig und unlösbar verbunden werden, wobei das eingesetzte Spritzgusswerkzeug Werkzeughälften (25, 27) aufweist, die eine Formkammer (31) begrenzen, die in eine Hauptkammer (31) und eine Teilkammer (33) aufgeteilt ist, und dass ein Sperrschieber (29) vorgesehen ist, der beim Einspritzen der Träger-Kunststoffkomponente (8) die Teilkammer (33) einnimmt bzw. schließt und im zweiten Verfahrensschritt (II) die Teilkammer (33) freigibt, **dadurch gekennzeichnet, dass** der Sperrschieber (29) quer zur Entformungsrichtung verstellbare Vorsprünge aufweist, um eine Formschlussverbindung zwischen dem Träger (9) und dem Lichtleiter (11) zu erzeugen.

2. Verfahren nach Anspruch 1, **dadurch gekennzeichnet, dass** die Materialpaarung des Trägers (9) und des Lichtleiters (11) aus nicht aneinander haftenden Kunststoffkomponenten (8, 10) besteht, insbesondere einer polaren und einer unpolaren Kunststoffkomponente, und/oder dass das Material der Träger-Kunststoffkomponente (8) PC oder ABS ist und das Material der Lichtleiter-Kunststoffkomponente (10) aus COP ist.

3. Verfahren nach Anspruch 1 oder 2, **dadurch gekennzeichnet, dass** die Lichtleiter-Kunststoffkomponente (10) unter einer speziellen Temperaturführung an die Träger-Kunststoffkomponente (8) angespritzt wird, und/oder dass die Träger-Kunststoffkomponente (10) eine höhere Schmelztemperatur als die Lichtleiter-Kunststoffkomponente (10) aufweist, so dass es beim Anspritzen der Lichtleiter-Kunststoffkomponente (8) an der schon ausgehärteten Träger-Kunststoffkomponente (8) zu keinem Anhaften kommt.

4. Verfahren nach einem der vorhergehenden Ansprüche, **dadurch gekennzeichnet, dass** ein Dekorelement (5) durch ein sogenanntes Insert-Molding aufgebracht wird, bei dem ein Vorformling mit Stanzung im Lichtleiterbereich in das Werkzeug eingelegt wird, oder dass das Dekorelement (5) durch ein IMD-Verfahren (In-Mold-Decoration) aufgebracht wird, bei dem eine endlos lackierte Dekorfolie (4) durch das Spritzgießwerkzeug geführt und dort hinterspritzt wird, wobei die von der Dekorfolie (4) getragene Lackschicht (5) von der Dekorfolie (4) auf die Träger-Kunststoffkomponente (8) übergeht, und dass insbesondere das Dekorelement (5) an seiner von der Sichtseite abgewandten Seite mit einem Haftvermittler (7) versehen ist, der eine stoffschlüssige Haftverbindung zwischen dem Dekorelement (5) und dem Träger (9) gewährleistet, wobei insbesondere der Haftvermittler (7) derart ausgelegt ist, dass es zu keiner stoffschlüssigen Haftverbindung mit dem Lichtleiter (11) kommt.

5. Bauteilverbund mit einem Träger (9), insbesondere einer Blende, und einem Lichtleiter (11), welcher Bauteilverbund (3) ein Montagespritzguss-Bauteil ist, bei dem der Träger (9) und der Lichtleiter (11) ohne Stoffschlussverbindung formschlüssig und unlösbar miteinander verbunden sind, **dadurch gekennzeichnet, dass** der Träger (9) einen Montagekanal (15) aufweist, in dem der Lichtleiter (11) formschlüssig und unlösbar eingesetzt ist, und dass zur Bereitstellung einer Formschlussverbindung in den Kanalwänden (17) des Montagekanals (15) eine Formschlusskontur (19) ausgebildet ist, die mit einer Gegenkontur (21) des Lichtleiters (11) in unlösbarem Rasteingriff ist.

6. Bauteilverbund nach Anspruch 5, **dadurch gekennzeichnet, dass** zwischen dem Lichtleiter (11) und dem Träger (9), insbesondere durch Materialschwindung, ein geringfügiger Montagespalt (m) vorhanden ist.

7. Bauteilverbund nach Anspruch 5 oder 6, **dadurch gekennzeichnet, dass** der Bauteilverbund (3) an seiner Sichtseite ein Dekorelement (5), insbesondere eine Lackschicht oder dergleichen, aufweist, die eine sichtseitige Kanalöffnung des im Träger (9) ausgebildeten Montagekanals (15) überdeckt, und dass das Dekorelement (5) auf seiner dem Montagekanal (15) zugewandten Seite einen Haftvermittler (7) aufweist, der eine Stoffschlussverbindung mit dem Lichtleiter (11) unterbindet.

## Claims

1. Method for producing a composite component (3), which is made up at least of a carrier (9), for instance a trim panel, and a light guide (11), comprising a first method step (I), in which a carrier plastic component (8) is injected into a main chamber (31) that reproduces the negative form of the carrier (9), while leaving free a subchamber (33) that reproduces the negative form of the light guide (11), and comprising a second method step (II), in which a light-guide plastic component (10) is injected into the subchamber (33), wherein the composite component (3) is produced in an assembly injection-moulding process, in which the carrier (9) and the light guide (11) are connected in an interlocking and inseparable manner without a material-bonding connection, wherein the injection-moulding tool that is used has tool halves (25, 27), which bound a mould chamber (31), which is divided into a main chamber (31) and a subchamber (33), and that a shut-off slide (29) is provided, taking up or closing the subchamber (33) when the carrier plastic component (8) is being injected and releasing the subchamber (33) in the second method step (II), **characterized in that** the shut-off slide (29) has projections that are adjustable transversely in relation to the demoulding direction, in order to create an interlocking connection between the carrier (9) and the light guide (11).

2. Method according to Claim 1, **characterized in that** the material pairing of the carrier (9) and the light guide (11) consists of plastic components (8, 10) that do not adhere to one another, in particular a polar and a non-polar plastic component, and/or **in that** the material of the carrier plastic component (8) is PC or ABS and the material of the light-guide plastic component (10) is of COP.

3. Method according to Claim 1 or 2, **characterized in that** the light-guide plastic component (10) is injected onto the carrier plastic component (8) under specific temperature control, and/or **in that** the carrier plastic component (10) has a higher melting temperature than the light-guide plastic component (10), so that no adhesive attachment occurs when the light-guide plastic component (8) is injected onto the already cured carrier plastic component (8).

4. Method according to one of the preceding claims, **characterized in that** a decorative element (5) is applied by so-called insert moulding, in which a stamped preform is placed into the tool in the region of the light guide, or **in that** the decorative element (5) is applied by an IMD method (in-mould decoration), in which a continuously coated decorative film (4) is passed through the injection-moulding tool and provided there with a an injection-moulded backing layer, wherein the coating layer (5) carried by the decorative film (4) is transferred from the decorative film (4) to the carrier plastic component (8), and **in that** in particular the decorative element (5) is provided on its side facing away from the visible side with an adhesion promoter (7), which ensures a material-bonding adhesive connection between the decorative element (5) and the carrier (9), wherein in particular the adhesion promoter (7) is designed in such a way that no material-bonding adhesive connection with the light guide (11) occurs.

5. Composite component comprising a carrier (9), in particular a trim panel, and a light guide (11), which composite component (3) is an assembly injection-moulded component, in which the carrier (9) and the light guide (11) are connected to one another in an interlocking and inseparable manner without a material-bonding connection, **characterized in that** the carrier (9) has an assembly channel (15), in which the light guide (11) is fitted in an interlocking and inseparable manner, and **in that**, to provide an interlocking connection, formed in the channel walls (17) of the assembly channel (15) is an interlocking contour (19), which is in inseparable locking engagement with a mating contour (21) of the light guide (11).

6. Composite component according to Claim 5, **characterized in that** between the light guide (11) and the carrier (9) there is a slight assembly gap (m), in particular as a result of material shrinkage.

7. Composite component according to Claim 5 or 6, **characterized in that** the composite component (3) has on its visible side a decorative element (5), in particular a coating layer or the like, which covers over a channel opening on the visible side of the assembly channel (15) formed in the carrier (9), and **in that** the decorative element (5) has on its side facing the assembly channel (15) an adhesion promoter (7), which prevents a material-bonding connection with the light guide (11).

## Revendications

1. Procédé de fabrication d'un composant composite (3) constitué d'au moins un support (9), d'environ un diaphragme et d'un guide optique (11), comportant une première étape de procédé (I) lors de laquelle un composant en matière plastique de support (8) est injecté dans une chambre principale (31) représentant la forme négative du support (9), et cela après séparation d'une chambre partielle (33) représentant une forme négative du guide optique (11), et comportant une deuxième étape de procédé (II) lors de laquelle un composant en matière plastique de guide optique (10) est injecté dans la chambre partielle (33), dans lequel le composant composite (3) est fabriqué conformément à un procédé d'assemblage par moulage par injection lors duquel le support (9) et le guide optique (11) sont reliés par complémentarité de forme et de manière non séparable sans liaison par complémentarité de matériaux, dans lequel l'outil de moulage par injection mis en oeuvre comprend des moitiés d'outil (25, 27) qui délimitent une chambre de moulage (31) divisée en une chambre principale (31) et une chambre partielle (33), et en ce qu'il est prévu une vanne d'arrêt (29) qui active ou ferme la chambre partielle (33) lors de l'injection du composant en matière plastique de support (8) et libère la chambre partielle (33) lors de la deuxième étape de procédé (II), **caractérisé en ce que** la vanne d'arrêt (29) comprend transversalement à la direction de démoulage des protubérances réglables destinées à générer une liaison par complémentarité de forme entre le support (9) et le guide optique (11).

2. Procédé selon la revendication 1, **caractérisé en ce que** l'appariement de matériaux du support (9) et du guide optique (11) est constitué de composants en matière plastique (8, 10) n'adhérant pas les uns aux autres, notamment de composants en matière plastique polaire et non polaire et/ou **en ce que** le matériau des composés en matière plastique du support (8) est constituée de PC ou d'ABS et **en ce que** le matériau des composants en matière plastique de guide optique (10) est constitué de COP.

3. Procédé selon la revendication 1 ou 2, **caractérisé en ce que** le composant en matière plastique de guide optique (10) est moulé par injection sur le composant en matière plastique de support (8) avec une régulation de température particulière et/ou **en ce que** le composant en matière plastique de support (10) présente un point de fusion plus élevé que celui du composant en matière plastique de guide optique (10) de manière à ce qu'il ne se produise pas d'adhérence au composant en matière plastique de support (8) déjà durci lors du moulage par injection du composant en matière plastique de guide optique (8).

4. Procédé selon l'une quelconque des revendications précédentes, **caractérisé en ce qu'**un élément de décoration (5) est appliqué par un moulage dit d'insertion lors duquel une préforme avec poinçonnage est introduite dans la zone de guide optique dans l'outil ou **en ce que** l'élément de décoration (5) est monté par un procédé IMD (In-Mold-Decoration) lors duquel une feuille de décoration vernie sans fin (4) est guidée à travers l'outil de moulage par injection et y est surmoulée, dans lequel la couche de vernis (5) transférée par la feuille de décoration (4) passe de la feuille de décoration (4) au composant en matière plastique de support (8) et **en ce que** l'élément de décoration (5) est notamment muni d'un agent d'adhérence (7) sur sa face qui est opposée à la face revêtue, lequel agent d'adhérence garantit une liaison adhésive par complémentarité de matériaux entre l'élément de décoration (5) et le support (9), dans lequel l'agent d'adhérence (7) est notamment conçu pour ne pas provoquer de liaison d'adhérence par complémentarité de matériaux avec le guide optique (11) .

5. Composant composite comportant un support (9), notamment un diaphragme et un guide optique (11), lequel composant composite (3) est un composant de moulage par injection au moyen duquel le support (9) et le guide optique (11) sont liés l'un à l'autre par complémentarité de forme et de manière non séparable sans liaison par complémentarité de matériaux, **caractérisé en ce que** le support (9) comprend un canal de montage (15) dans lequel le guide optique (11) est inséré par complémentarité de forme et de manière non séparable et **en ce que**, pour fournir une liaison par complémentarité de forme dans les parois de canal (17) du canal de montage (15), il est formé un contour de complémentarité de forme (19) qui est en contact d'accrochage non séparable avec le contour complémentaire (21) du guide optique (11).

6. Composant composite selon la revendication 5, **caractérisé en ce qu'**il est prévu un petit interstice de montage (m), notamment par retrait de matériau, entre le guide optique (11) et le support (9).

7. Composant composite selon la revendication 5 ou 6, **caractérisé en ce que** le composant composite (3) présente sur sa face revêtue un élément de décoration (5), notamment une couche de vernis ou autre, qui recouvre une ouverture de canal du canal de montage (15) formé dans le support (9) et **en ce que** l'élément de décoration (5) présente sur sa face opposée au canal de montage (15) un agent d'adhérence (7) qui empêche une liaison par complémentarité de matériaux avec le guide optique (11).
